# EUROPEAN PATENT SPECIFICATION

(11) **EP 3 905 082 B1**
(45) Date of publication and mention of the grant of the patent: **18.09.2024**
(21) Application number: 20755325.6
(22) Date of filing: 03.02.2020
(51) Int. Cl.: G06F 21/44, G06F 21/56, G06F 21/31, G06F 21/33, G06F 21/34, G07C 9/00, H04L 67/125, H04W 4/80, H04W 12/06, H04W 12/50, H04L 9/40

(54) **REMOTE CONTROL SYSTEM**
FERNSTEUERUNGSSYSTEM
SYSTÈME DE COMMANDE À DISTANCE

(30) Priority: 12.02.2019 JP 2019022886
(43) Date of publication of application: 03.11.2021
(73) Proprietor: Panasonic Intellectual Property Management Co., Ltd., Osaka-shi, Osaka 540-6207 (JP)
(72) Inventor: FUKUDA Naohiro, Chuo-ku, Osaka-shi, Osaka 540-6207 (JP); OKAGE Satoshi, Chuo-ku, Osaka-shi, Osaka 540-6207 (JP); AKIMOTO Masao, Chuo-ku, Osaka-shi, Osaka 540-6207 (JP)
(74) Representative: Appelt, Christian W.
(86) International application number: PCT/JP2020/003876
(87) International publication number: WO 2020/166405

(56) References cited:
- JP-A- 2003 343 133
- JP-A- 2008 544 664
- JP-A- 2011 523 798
- JP-A- 2013 209 821
- JP-A- 2017 218 723
- JP-A- 2017 524 301
- JP-A- 2018 020 611
- JP-A- 2018 020 611
- US-A1- 2007 300 070
- US-A1- 2016 036 788
- US-A1- 2018 261 028

## Description

### [TECHNICAL FIELD]

The disclosure relates to data processing technologies, and, more particularly, to a technology for controlling a target device remotely.

### [BACKGROUND ART]

In multi-unit apartment buildings, etc. a delivery box (i.e., a home delivery box) for temporarily keeping a baggage delivered to a resident may be installed. Patent Literature 1 below proposes a system that uses a cellular phone of the user of the delivery box for authentication to unlock the delivery box.

[Patent Literature 1] JP2013-142916

US 2016/0036788 A1 discloses methods and devices for wireless key management for authentication comprising a controlled device and a communication terminal, wherein the mobile communication terminal performs wireless communication with the controlled device. Furthermore, JP 2018-20611 A discloses a device to unlock the vehicle door, wherein a request signal is transmitted to a portable machine, and answer signal transmitted by the portable machine according to the request signal is received. A response time until the answer signal is received after transmitting the request signal is measured. When the response time is shorter than a threshold time, the door is unlocked, when the response time is longer than the threshold time, the door is not unlocked.

### [SUMMARY OF INVENTION]

### [TECHNICAL PROBLEM]

Recently, malware that causes an information terminal such as a smartphone to perform an unauthorized operation has been around, and users may have their information terminals infected with malware unknowingly. In this background, it is required to ensure security when an external device is remotely controlled by using an information terminal of a user.

The disclosure addresses this issue, and a purpose thereof is to provide a technology of improving security when an external device is remotely controlled by using an information terminal of a user.

### [SOLUTION TO PROBLEM]

The invention is defined in the independent claims. Particular embodiments are set out in the dependent claims.

The above-mentioned problem is solved by a remote control system according to claim 1, wherein claims 2 to 11 relate to specifically advantageous realizations of the control system according to claim 1. A remote control system according to an embodiment of the present disclosure includes: a controlled device that is remotely controlled; and a mobile communication terminal that performs wireless communication with the controlled device. The controlled device transmits, when accepting remote control, first data to the communication terminal, the communication terminal transmits second data including a detail of remote control to the controlled device in response to the first data, and the controlled device performs a process determined by the detail of remote control included in the second data when a time elapsed since the first data is transmitted until the second data is received is less than a threshold value.

Optional combinations of the aforementioned constituting elements, and implementations of the present disclosure in the form of systems, computer programs, recording mediums recording computer programs, etc. may also be practiced as additional modes of the present disclosure.

### [ADVANTAGEOUS EFFECTS OF INVENTION]

According to the disclosure, it is possible to improve security when an external device is remotely controlled by using an information terminal of a user.

### [BRIEF DESCRIPTION OF DRAWINGS]

Fig. 1 shows an exemplary operation (normally performed) to unlock a delivery box;
Fig. 2 shows an exemplary operation (performed in the presence of an attack) to unlock a delivery box;
Fig. 3 shows a configuration of a remote control system according to the first embodiment;
Fig. 4 is a block diagram showing the functional blocks of the delivery box according to the first embodiment;
Fig. 5 is a block diagram showing the functional blocks of the user terminal according to the first embodiment;
Fig. 6 is a block diagram showing the functional blocks of the server according to the first embodiment;
Fig. 7 is a chart showing the operation of the devices in the remote control system according to the embodiment;
Fig. 8 is a block diagram showing the functional blocks of the delivery box according to the second embodiment;
Fig. 9 is a block diagram showing the functional blocks of the user terminal according to the second embodiment;
Fig. 10 is a block diagram showing the functional blocks of the server according to the second embodiment; and
Fig. 11 shows the operation of the devices in the remote control system according to the second embodiment.

### [DESCRIPTION OF EMBODIMENTS]

The device or the entity that executes the method according to the disclosure is provided with a computer. By causing the computer to run a program, the function of the apparatus or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The terms IC and LSI may change depending on the integration degree, and the processor may be comprised of a system LSI, a very large scale integration (VLSI), or an ultra large scale integration (USLI). A field programmable gate array (FPGA) programmed after the LSI is manufactured, or a reconfigurable logic device, in which the connections inside the LSI are reconfigurable or the circuitry blocks inside the LSI can be set up, can be used for the same purpose. The plurality of electronic circuits may be integrated in one chip or provided in a plurality of chips. The plurality of chips may be aggregated in one device or provided in a plurality of apparatuses. The program is recorded in a non-transitory recording medium such as a computer-readable ROM, optical disk, and hard disk drive. The program may be stored in a recording medium in advance or supplied to a recording medium via wide area communication network including the Internet.

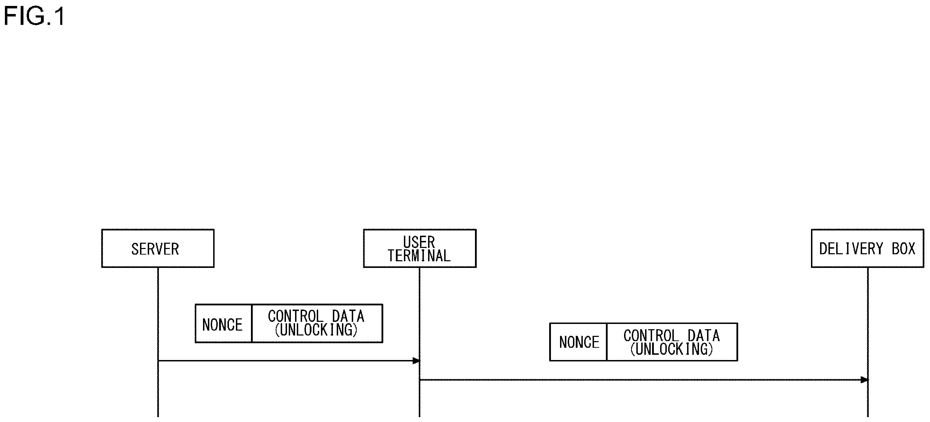

A summary of the embodiment is given below. Fig. 1 shows an exemplary operation (normally performed) to unlock a delivery box. When the delivery box is unlocked, the server transmits a nonce and control data (a command, etc.) for unlocking to a user terminal (a smartphone, etc.). A nonce is a one-time random value and is a measure to counter a replay attack. The user terminal transfers the nonce and the control data for unlocking to the delivery box. The delivery box unlocks the electric lock of the door in accordance with the control data.

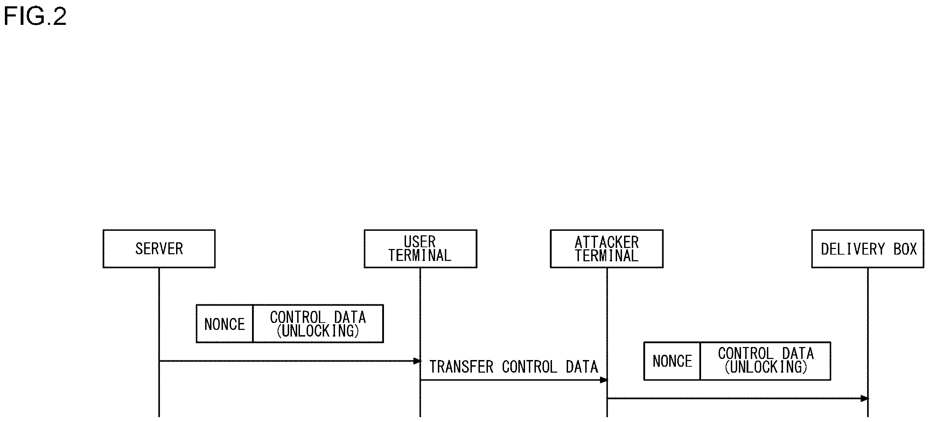

Fig. 2 shows an exemplary operation (performed in the presence of an attack) to unlock a delivery box. Fig. 2 shows a case of a man in the middle attack. The user terminal is infected with malware, and the malware causes the control data to be transferred to an attacker terminal. When the attacker sees that the user leaves the delivery box because of the failure to unlock the delivery box, the attacker causes the attacker terminal to transmit the nonce and the control data to the delivery box to unlock the delivery box. As a result, the article in the delivery box is illegally acquired by the attacker.

Thus, the OS and wireless communication in a user terminal such as a smartphones have vulnerability. Therefore, there is a concern that the attacker gains control of the user terminal by exploiting the vulnerability of the user terminal and causing it to be infected with malware, retransmits the control data for controlling a remotely controlled device with a delay, and manipulates the controlled device illegally. In the embodiment, there is proposed a remote control system in which is introduced a scheme for protecting against a delayed retransmission attack on remote control of a target device (in the embodiment, the delivery box) via a user terminal.

### (First embodiment)

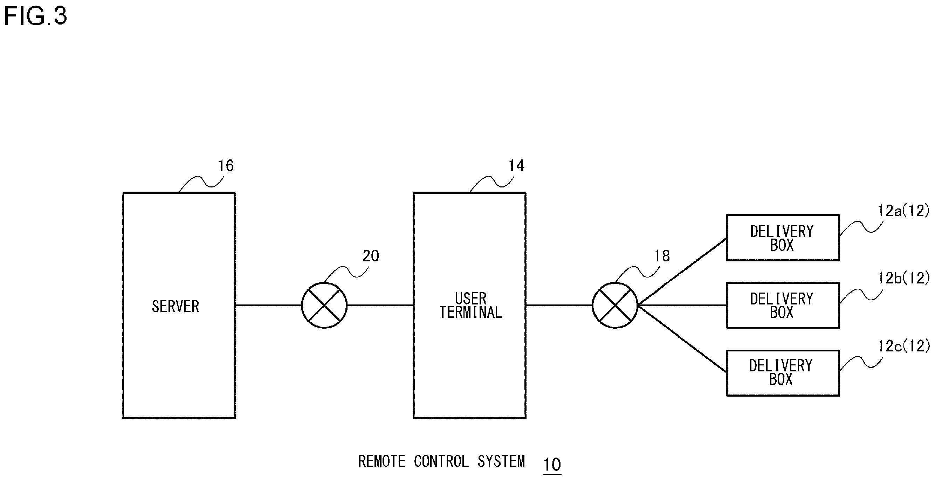

Fig. 3 shows a configuration of a remote control system 10 according to the first embodiment. The remote control system 10 includes a delivery box 12a, a delivery box 12b, a delivery box 12c (generically referred to as "a delivery box 12"), a user terminal 14, and a server 16. The remote control system 10 can be said to be a communication system or an information processing system and realizes secure remote control of the delivery box 12 using the user terminal 14.

The delivery box 12 can be said to be a controlled device that is remotely controlled. The user terminal 14 is a mobile communication terminal controlled by a user of the delivery box and, in the embodiment, a user who takes out a baggage from the delivery box. The user terminal 14 may be a smartphone or a tablet terminal and communicates wirelessly with the delivery box 12. The server 16 is an information processing device provided on the cloud. The server 16 can be said to be an information consolidating device that controls a plurality of delivery boxes 12 in a consolidated manner.

The user terminal 14 and the delivery box 12 are connected via a near-field communication network 18. On the other hand, the user terminal 14 and the server 16 are connected via a wide-area communication network. The near-field communication network 18 encompasses near-field wireless communication. In the embodiment, Bluetooth Low Energy ("Bluetooth" is a registered trademark) (hereinafter, referred to as "BLE") is assumed. The wide-area communication network 20 encompasses wide-area wireless communication. For example, the fourth generation mobile communication system or the Internet may be encompassed.

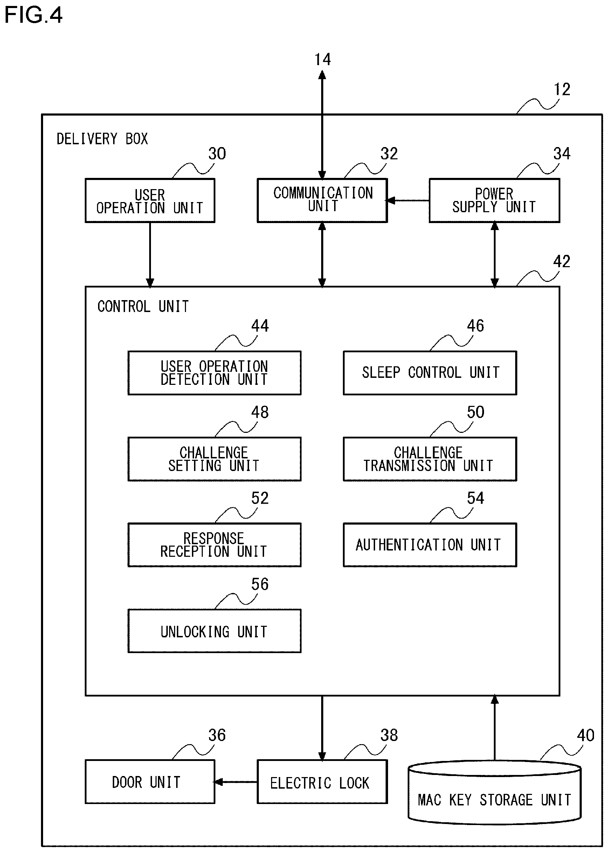

Fig. 4 is a block diagram showing the functional blocks of the delivery box 12 according to the first embodiment. The blocks depicted in the block diagram of this disclosure are implemented in hardware such as devices and mechanical apparatus exemplified by a CPU and a memory of a computer, and in software such as a computer program. Fig. 4 depicts functional blocks implemented by the cooperation of these elements. Therefore, it will be understood by those skilled in the art that the functional blocks may be implemented in a variety of manners by a combination of hardware and software.

The delivery box 12 includes a user operation unit 30, a communication unit 32, a power supply unit 34, a door unit 36, an electric lock 38, a MAC key storage unit 40, and a control unit 42. In the embodiment, it is assumed that each of the plurality of delivery boxes 12 includes a plurality of functional blocks shown in Fig. 4. In a variation, at least some functional blocks (e.g., the user operation unit 30, the power supply unit 34, etc.) of the plurality of functional blocks may be shared by a plurality of delivery boxes 12.

The door unit 36 is an openable door provided at a baggage retrieval port of the delivery box. The electric lock 38 is a key to the door unit 36 capable of switching between a locked state and a unlocked state electrically. The power supply unit 34 supplies power to the parts of the delivery box 12. The power supply unit 34 of the embodiment is a battery power supply. When caused by a sleep control unit 46 described later to make a transition to a suspended state (i.e., a sleep state) , the power supply unit 34 reduces the supply of power from a normal level. For example, the power supply unit 34 reduces the supply of power to the communication unit 32 in a suspended state.

The user operation unit 30 is a component that receives a user operation by a user. For example, the user operation unit 30 is a button provided on the casing of the delivery box 12. In the embodiment, a predetermined user operation for unlocking the electric lock 38 (which can be said to be a predetermined user operation designating acceptance of remote control and hereinafter referred to as "an unlocking process start user operation") is input to the user operation unit 30. For example, the unlocking process start user operation may be pressing of a predetermined button embodying the user operation unit 30. When the unlocking process start user operation is input, the control unit 42 described later performs a data process and a communication process for accepting remote control designating unlocking of the electric lock 38.

The communication unit 32 communicates with an external device by using a predetermined communication protocol (in the embodiment, BLE). The control unit 42 described later exchanges data with the user terminal 14 via the communication unit 32. The communication unit 32 is driven by power supplied from the power supply unit 34 (in the embodiment, the battery). The communication unit 32 is provided with a normal state and a suspended state and reduces the amount of used power by restricting (e.g., stopping) the communication function in the suspended state.

The MAC key storage unit 40 stores a key (hereinafter, also referred to as "a MAC key") for generating a code for message authentication (hereinafter, also referred to as "MAC"). The same MAC key as the MAC stored in the MAC key storage unit 40 is also stored in the server 16.

The control unit 42 performs various data processes for accepting secure remote control. The control unit 42 includes a user operation detection unit 44, a sleep control unit 46, a challenge setting unit 48, a challenge transmission unit 50, a response reception unit 52, an authentication unit 54, and an unlocking unit 56. A computer program in which the plurality of these functional blocks are implemented may be installed in the storage area (recording medium) in the delivery box 12. The CPU of the delivery box 12 may cause the functional blocks to exhibit the functions by reading the computer program into the main memory and running the program.

When the unlocking process start user operation is input to the user operation unit 30, the user operation detection unit 44 detects the input. When a series of processes related to acceptance of remote control, and, specifically, a series of processes related to unlocking of the electric lock 38 according to the embodiment, are completed, the sleep control unit 46 reduces the power consumption by causing the communication unit 32 to make a transition to the suspended state. Further, when an input of the unlocking process start user operation is detected, the sleep control unit 46 causes the communication unit 32 to return from the suspended state to the normal state and to start wireless communication.

When an input of the unlocking process start user operation is detected, the challenge setting unit 48 sets first data (also referred to as "challenge data") including a random value generated by a predetermined random value generator (also referred to as a challenge). The challenge data includes (1) a nonce, (2) a random value, and (3) a MAC. The challenge setting unit 48 generates a MAC based on the MAC key stored in the MAC key storage unit 40 (i.e., the MAC key shared with the server 16) and the random value. The challenge transmission unit 50 transmits the challenge data set by the challenge setting unit 48 to the user terminal 14. In the embodiment, a random value is set in the challenge data. In a variation, the challenge setting unit 48 may set, in the challenge data, data different from the random value and, more specifically, data having a unique value such as a counter value that varies each time it is generated.

The response reception unit 52 receives second data in response to the challenge data and, more specifically, response data transmitted from the user terminal 14. The response data includes (1) a nonce, (2) a random value, (3) control data, and (4) a MAC. The random value in the response data is derived by converting the random value in the challenge data according to a rule predefined between the delivery box 12 and the server 16 and can be said to be an authentication value authenticated by the delivery box 12. In the embodiment, the random value in the response data is derived by adding "1" to the random value in the challenge data. In a variation, the rule predefined between the delivery box 12 and the server 16 may be a particular basic arithmetic operation on a particular value.

The control data in the response data includes the detail of remote control (i.e., remote user operation) on the delivery box 12. The control data according to the embodiment includes data designating unlocking of the electric lock 38. The MAC in the response data is generated by the server 16 based on the MAC key stored in the server 16 (i.e., the MAC key shared with the delivery box 12), the random value, and the control data.

The authentication unit 54 performs an authentication process based on the response data received by the response reception unit 52 to determine whether the response data is legitimate. When the authentication unit 54 determines that the response data is legitimate, the delivery box 12 performs a process determined by the detail of remote control included in the response data. In the embodiment, the unlocking unit 56 performs the process determined by the detail of remote control by unlocking the electric lock 38 in accordance with the control data included in the response data.

The process in the authentication unit 54 will be described in detail. The authentication unit 54 measures a time (hereinafter, also referred to as "a response time") elapsed since the challenge data is transmitted until the response data is received. The authentication unit 54 determines that the first condition is met provided that the response time is less than a predefined threshold value (which can be said to be an upper limit response time and is, for example, 20 seconds). An appropriate value may be determined to be the threshold value according to the knowledge of the developer of the remote control system 10 or an experiment using the the remote control system 10 (including actual communication).

Further, the authentication unit 54 checks whether the random value included in the response data corresponds to the random value included in the challenge data. Stated otherwise, the authentication unit 54 checks whether the random value included in the response data matches the value derived by converting the random value included in the challenge data according to the predefined rule. In the embodiment, the authentication unit 54 stores the random value included in the challenge data transmitted by the challenge transmission unit 50 and checks whether the random value included in the response data is the random value included in the challenge data + 1. The authentication unit 54 determines that the second condition is met provided that the random value included in the response data corresponds to the random value included in the challenge data.

Further, the authentication unit 54 checks whether message authentication using the MAC included in the response data is successful. More specifically, the authentication unit 54 generates a MAC based on the MAC key stored in the MAC key storage unit 40, the random value, and the control data included in the response data. The authentication unit 54 determines that the message authentication is successful provided that the generated MAC matches the MAC included in the response data. The authentication unit 54 determines that the third condition is met when the message authentication is successful. When all of the first condition, the second condition, and the third condition are met, the authentication unit 54 determines that the response data is legitimate. When at least one of the first condition, the second condition, and the third condition is not met, on the other hand, the authentication unit 54 determines that the response data is not legitimate.

The authentication unit 54 restricts (in the embodiment, prohibits) the execution of the process determined by the detail of remote control included in the response data in accordance with the response time elapsed since the transmission of the challenge data until the reception of the response data. Further, the authentication unit 54 restricts the execution of the process determined by the detail of remote control included in the response data in accordance with the random number included in the response data. Further, the authentication unit 54 restricts the execution of the process determined by the detail of remote control included in the response data in accordance with the result of message authentication using the MAC included in the response data.

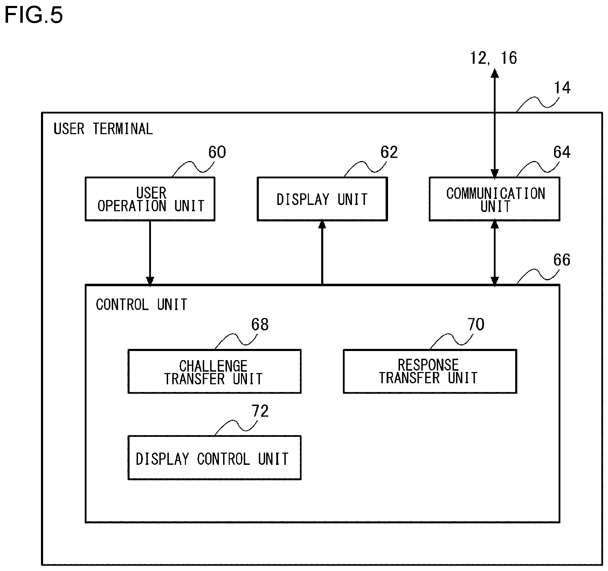

Fig. 5 is a block diagram showing the functional blocks of the user terminal 14 according to the first embodiment. The user terminal 14 includes a user operation unit 60, a display unit 62, a communication unit 64, and a control unit 66. The user operation unit 60 is a component that receives a user operation by a user. The display unit 62 includes a screen and presents various information to the user. The user operation unit 60 and the display unit 62 may be integrated in, for example, a liquid crystal display provided a touch panel function.

The communication unit 64 communicates with an external device by using a predetermined communication protocol. In the embodiment, the communication unit 64 communicates with the delivery box 12 by using BLE and also communicates with the server 16 by using wide-area wireless communication (e.g., the fourth-generation mobile communication system). The control unit 66 performs various data processes. The control unit 66 exchanges data with the delivery box 12 and the server 16 via the communication unit 64.

The control unit 66 includes a challenge transfer unit 68, a response transfer unit 70, and a display control unit 72. A computer program (e.g., a client application for remote control) in which these plurality of functional blocks are implemented may be stored in a recording medium and installed in the storage area in the user terminal 14 via the recording medium. Alternatively, the computer program may be downloaded via a network and installed in the storage area in the user terminal 14. The CPU of the user terminal 14 may cause the functional blocks to exhibit the functions by reading the computer program into the main memory and running the program.

The challenge transfer unit 68 receives the challenge data transmitted from the delivery box 12 and transfers the received challenge data to the server 16. The response transfer unit 70 receives the response data transmitted from the server 16 and transfers the received response data to the delivery box 12 as a response to the challenge data.

The display control unit 72 causes the display unit 62 that communication is proceeding during communicating with the server 16 and the delivery box 12. The display control unit 72 may further cause the display unit 62 to display a content that prompts the user to wait for a while until the delivery box 12 is unlocked. In a variation, the display control unit 72 may cause the display unit 62 to display that communication is proceeding during communication with at least the server 16.

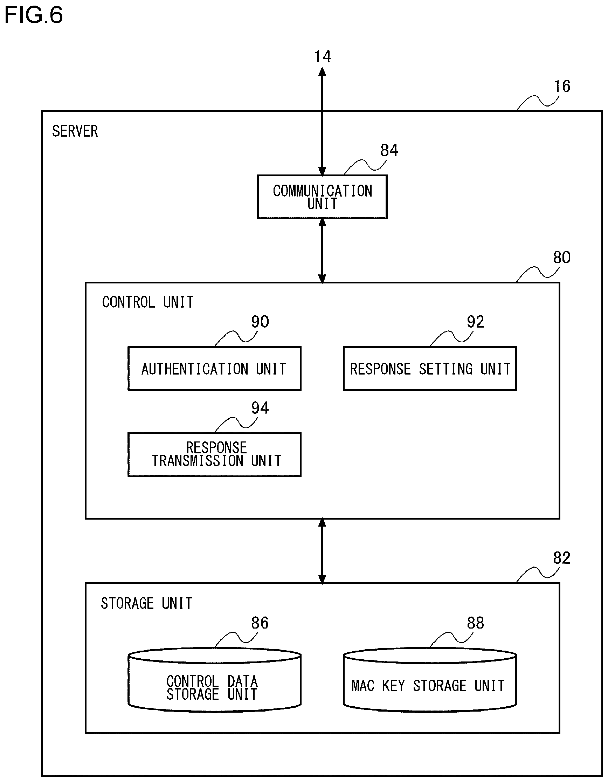

Fig. 6 is a block diagram showing the functional blocks of the server 16 according to the first embodiment. The server 16 includes a control unit 80, a storage unit 82, and a communication unit 84. The control unit 80 operates in coordination with the plurality of delivery boxes 12 and performs a data process for performing remote control (in the embodiment, unlocking) of the plurality of delivery boxes 12 in a consolidated manner. The storage unit 82 stores data referred to or updated by the control unit 80.

The communication unit 84 communicates with an external device by using a predetermined communication protocol. In the embodiment, the communication unit 84 communicates with the user terminal 14 by using wide-area communication (e.g. the Internet or the fourth-generation mobile communication system). The control unit 80 exchanges data with the user terminal 14 via the communication unit 84.

The storage unit 82 includes a control data storage unit 86 and a MAC key storage unit 88. The control data storage unit 86 stores data for controlling the delivery box 12 remotely. In the embodiment, the control data storage unit 86 stores control data (a command, etc.) for designating unlocking of the electric lock 38. The MAC key storage unit 88 stores the MAC key shared with the delivery box 12. The MAC key storage unit 88 may store MAC keys that are shared with the plurality of delivery boxes 12 and that are different for different delivery boxes 12.

The control unit 80 includes an authentication unit 90, a response setting unit 92, and a response transmission unit 94. A computer program in which these plurality of functional blocks are implemented may be installed in the storage area (recording medium) in the server 16. The CPU of the delivery box 12 may cause the functional blocks to exhibit the functions by reading the computer program into the main memory and running the program.

The response setting unit 92 receives the challenge data transmitted (transferred) from the user terminal 14 and sets the response data based on the challenge data. As already described, the response data includes (1) a nonce, (2) a random value, (3) control data, and (4) a MAC. The response setting unit 92 sets, as the random value in the response data, a value derived by converting the random number in the challenge data according to a rule predefined between the delivery box 12 and the server 16. In the embodiment, the value derived by adding "1" to the random value in the challenge data is set as the random value in the response data.

Further, the response setting unit 92 set, as the control data in the response data, the control data (in the embodiment, an instruction for unlocking) stored in the control data storage unit 86. More specifically, the response setting unit 92 generates a MAC based on the MAC key stored in the MAC key storage unit 88, the random value, and the control data. The response setting unit 92 sets the MAC in the control data. The response transmission unit 94 transmits the response data set by the response setting unit 92 to the user terminal 14 in response to the challenge data.

The authentication unit 90 checks whether message authentication using the MAC included in the challenge data is successful. More specifically, the authentication unit 54 generates a MAC based on the MAC key stored in the MAC key storage unit 88 and the random value included in the response data. The authentication unit 54 determines that the message authentication is successful provided that the generated MAC matches the MAC included in the challenge data. The authentication unit 90 permits transmission of the response data when the message authentication is successful. When the message authentication fails, on the other hand, the authentication unit 90 restricts (i.e., prohibits) the setting or transmission of the response data.

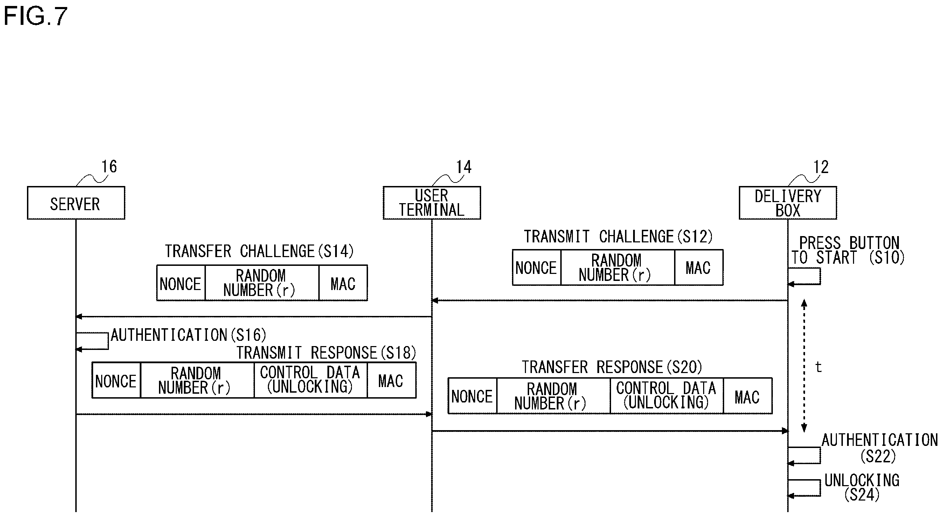

A description will be given of the operation of the remote control system 10 according to the first embodiment having the above configuration. Fig. 7 is a chart showing the operation of the devices in the remote control system 10 according to the first embodiment. Of the delivery box 12a, the delivery box 12b, and the delivery box 12c shown in Fig. 1, the reference numeral 12 in the figure denotes a particular delivery box that the user intends to unlock (i.e., that is controlled remotely). The same operation is performed regardless of which of the delivery box 12a, the delivery box 12b, and the delivery box 12c is unlocked.

A common MAC key is stored in the server 16 and the delivery box 12 in advance. The user inputs a predetermined unlocking process start user operation in the delivery box 12. The user operation detection unit 44 of the delivery box 12 detects the input of the unlocking process start user operation, and the sleep control unit 46 of the delivery box 12 returns the communication unit 32 from a suspended state to a normal state (S10). The challenge setting unit 48 of the delivery box 12 sets challenge data, and the challenge transmission unit 50 of the delivery box 12 transmits the challenge data to the user terminal 14 (S12).

When communication with the delivery box 12 is started, the display control unit 72 of the user terminal 14 starts displaying "communication proceeding" on the display unit 62. The challenge transfer unit 68 of the user terminal 14 transfers the challenge data to the server 16 (S14). The authentication unit 90 of the server 16 performs message authentication based on the MAC included in the challenge data (S16). When the legitimacy (i.e., tamper-proof property) of the challenge data is verified by message authentication, the response setting unit 92 of the server 16 generates response data based on the challenge data. The response transmission unit 94 of the server 16 transmits the response data to the user terminal 14 (S18).

The response transfer unit 70 of the user terminal 14 transfers the response data to the delivery box 12 (S20). When communication with the delivery box 12 is terminated, the display control unit 72 of the user terminal 14 terminates the display of "communication proceeding" on the display unit 62.

The response reception unit 52 of the delivery box 12 receives the response data. The authentication unit 54 of the delivery box 12 checks whether the response data is legitimate based on (1) the response time t elapsed since the transmission of the challenge data until the reception of the response data, (2) the random value in the response data, and ((3) the MAC in the response data. When it is determined that the response data is legitimate, the unlocking unit 56 of the delivery box 12 unlocks the electric lock 38 (S24). The user can open the door unit 36 of the delivery box 12 and take out the article stored in the delivery box 12. When the response data is determined to be illegitimate, S24 is skipped.

In the remote control system 10 according to the first embodiment, the control data from the server 16 is relayed by the user terminal 14 and delivered to the delivery box 12. It is therefore not necessary for the delivery box 12 to connect to the wide-area communication network 20 and may only perform near-field communication with the user terminal 14 so that an increase in the cost of the delivery box 12 is inhibited.

In further accordance with the remote control system 10 according to the first embodiment, a restriction is imposed on the response time elapsed since the transmission of the challenge data to the reception of the response data. This prevents unauthorized remote control (e.g., unauthorized unlocking) by means of response data theft and delayed retransmission by an attacker (i.e., a man in the middle attack).

In further accordance with the remote control system 10, the random value is set in the challenge data, and the authentication value corresponding to the random value in the challenge data is set in the response data. This allows the delivery box 12 to check whether the response data corresponds to the challenge data transmitted by the delivery box 12 so that the security of the delivery box 12 is further enhanced.

In further accordance with the remote control system 10, instructions for remote control (unlocking) of the plurality of delivery boxes 12 are executed by the server 16 in a consolidated manner. This simplifies management of authentication, etc. in the remote control system 10. For example, the process in the user terminal 14 is simplified.

Further, the remote control system 10 can realize message authentication (e.g., tamer-proof check) between the delivery box 12 and the server 16 by setting the MAC in the challenge data and the response data and so can enhance the security of the delivery box 12 even further.

It is considered that the communication unit 32, the control unit 42, etc. of the delivery box 12 are often provided after the delivery box 12 is installed. It is therefore desired that the communication unit 32, the control unit 42, etc. of the delivery box 12 be driven by a battery. In the case of battery driving, it is desired that consumption of the battery is reduced as much as possible. Thus, the communication unit 32 of the delivery box 12 in the remote control system 10 returns from a suspended state and performs wireless communication in response to the input of the unlocking process start user operation. This suppresses consumption of the battery in the delivery box 12.

Further, the user terminal 14 in the remote control system 10 displays that communication is proceeding during communication with the delivery box 12 and the server 16. This prevents the user from moving outside the communication rage, i.e., prevents the user from leaving the delivery box 12, thereby preventing unauthorized acquisition of the article by the attacker even more properly.

### (Second embodiment)

The configuration of the remote control system 10 according to the second embodiment is similar to the configuration of the remote control system 10 according to the first embodiment shown in Fig. 1. A difference is that the remote control system 10 according to the second embodiment further includes a function whereby the delivery box 12 pins the user terminal 14 and a function whereby the server 16 pins the user terminal 14. Hereinafter, features that are different from those of the first embodiment will be mainly explained, and duplication of an explanation from the first embodiment will be omitted appropriately.

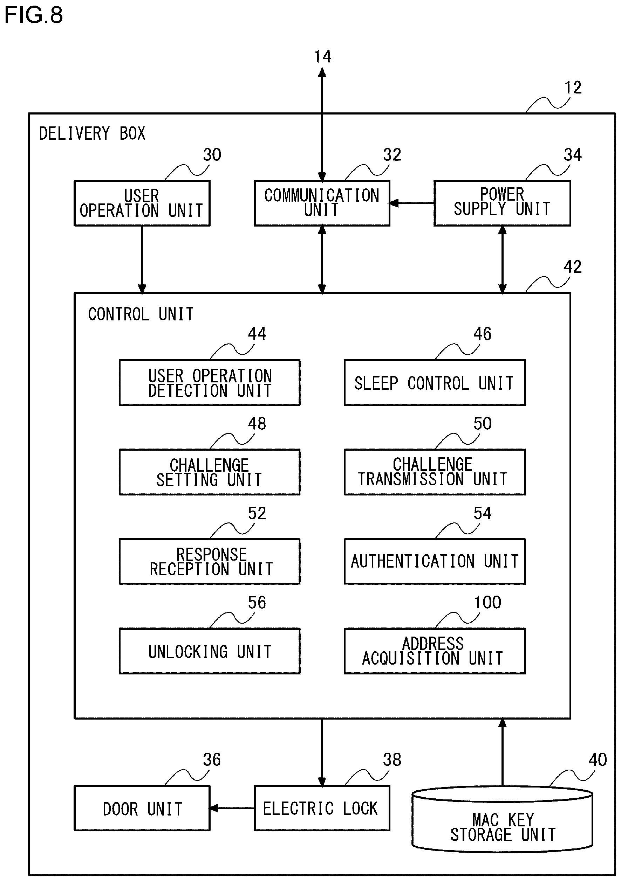

Fig. 8 is a block diagram showing the functional blocks of the delivery box 12 according to the second embodiment. In addition to the functional blocks of the first embodiment, the delivery box 12 according to the second embodiment includes an address acquisition unit 100.

When the input of the unlocking process start user operation is detected by the user operation detection unit 44, the communication unit 32 broadcasts a predetermined advertisement packet around. An address acquisition unit 100 acquires the address of the user terminal 14 (hereinafter, referred to as "a user terminal address") communicated from the user terminal 14 in response to the advertisement packet. The user terminal address in the embodiment is the address for BLE communication (access address).

The challenge data of the second embodiment includes data corresponding to the user terminal address communicated from the user terminal 14. More specifically, the challenge setting unit 48 sets data derived by synthesizing (e.g., concatenating) a random value and the user terminal address in the field for a random data in the challenge data. The challenge setting unit 48 may set a value derived by converting the user terminal address according to a predefined rule in the challenge data, instead of setting the user terminal address itself in the challenge data.

As described later, the response data of the second embodiment includes data corresponding to the user terminal address included in the challenge data. When the data included in the response data and corresponding to the user terminal address does not match the destination address of the challenge data stored in the challenge transmission unit 50 of the delivery box 12, the authentication unit 54 restricts the execution of the process determined by the detail of remote control included in the response data.

More specifically, the authentication unit 54 checks whether the user terminal address included in the field for a random number in the response data matches the destination address (to be more specific, the access address included in a BLE packet) of the challenge data stored in the challenge transmission unit 50 of the delivery box 12. When the addresses match, the authentication unit 54 determines that the fourth condition is met. When all of the first condition, the second condition, and the third condition described in the first embodiment plus the fourth condition described above are met, the authentication unit 54 determines that the response data is legitimate.

When at least the fourth condition is not met, the authentication unit 54 determines that the response data is not legitimate. As a result, the execution of the process (in the embodiment, unlocking) determined by the detail of remote control included in the response data is restricted.

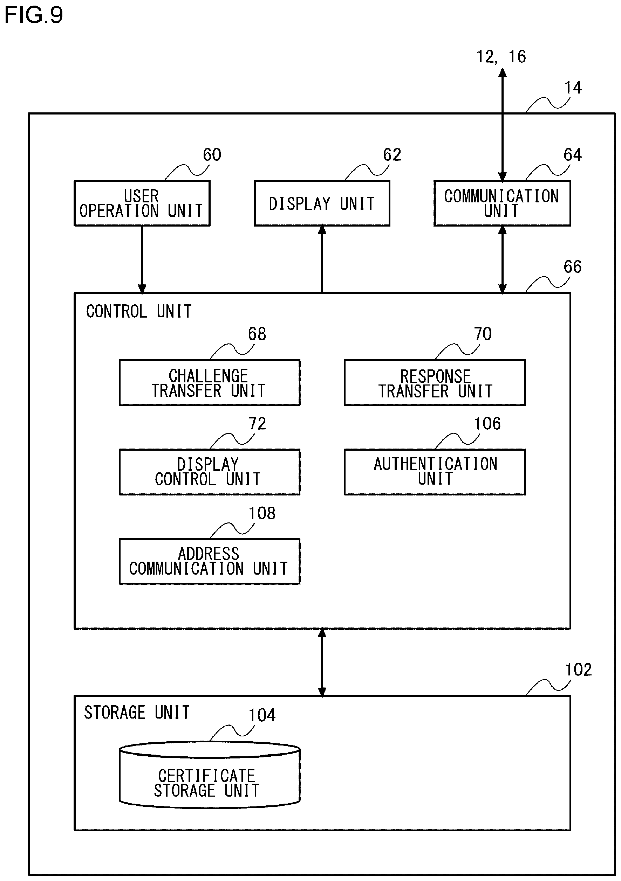

Fig. 9 is a block diagram showing the functional blocks of the user terminal 14 according to the second embodiment. The user terminal 14 according to the second embodiment includes a storage unit 102, an authentication unit 106, an address communication unit 108 in addition to the functional blocks of the first embodiment.

The storage unit 102 stores data updated or referred to by the control unit 66. The storage unit 102 includes a certificate storage unit 104. The certificate storage unit 104 stores a client certificate which is a certificate of the user terminal 14 issued by a certificate authority.

The authentication unit 106 performs mutual authentication with the server 16. When the authentication unit 106 performs mutual authentication with the server 16, the authentication unit 106 transmits the client certificate stored in the certificate storage unit 104 to the server 16. Additionally, the authentication unit 106 authenticates the server 16 based on the electronic certificate of the server 16 provided from the server 16, and, in the embodiment, based on the Secure Sockets Layer (SSL) server certificate.

When the advertisement packet transmitted from the delivery box 12 is received by the communication unit 32, the address communication unit 108 transmits the address (access address) of the user terminal 14 in BLE communication to the delivery box 12.

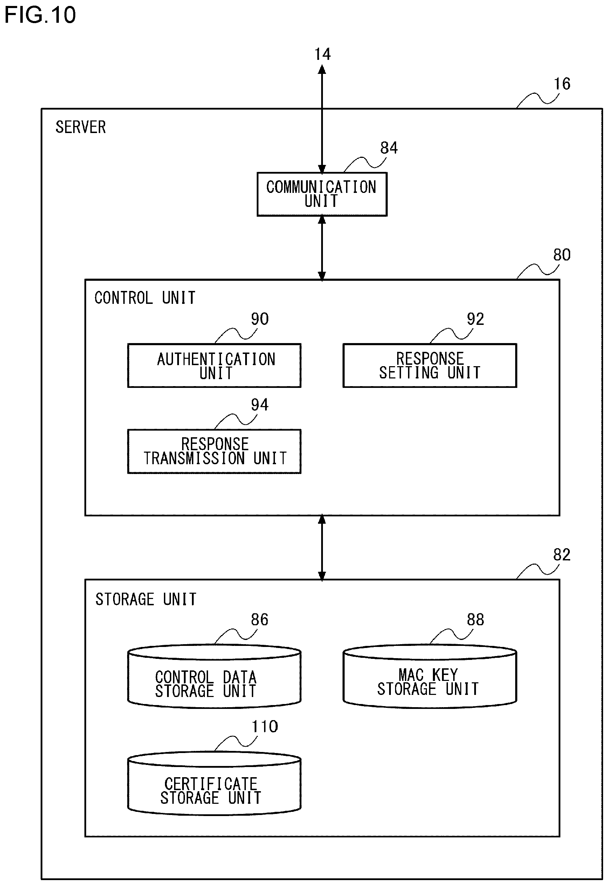

Fig. 10 is a block diagram showing the functional blocks of the server 16 according to the second embodiment. In addition to the functional blocks of the first embodiment, the server 16 according to the second embodiment includes a certificate storage unit 110. The certificate storage unit 110 stores the SSL server certificate that is the electronic certificate of the server 16 issued by a certificate authority. The SSL server certificate can be said to be an SSL/TLS (Transport Layer Security) serer certificate.

The authentication unit 90 performs mutual authentication with the user terminal 14. When the authentication unit 90 performs mutual authentication with the user terminal 14, the authentication unit 90 transmits the SSL server certificate stored in the certificate storage unit 110 to the user terminal 14. Additionally, the authentication unit 90 authenticates the user terminal 14 based on the client certificate provided from the user terminal 14. In other words, the authentication unit 90 performs client authentication of the user terminal 14.

The authentication unit 90 restricts communication with the user terminal 14 depending on the result of client authentication. For example, the authentication unit 90 prohibits communication with the user terminal 14. When client authentication fails, the communication unit 84 may not establish an SSL session with the user terminal 14 or disconnect from the user terminal 14. Alternatively, the authentication unit 90 may prohibit the response setting unit 92 from receiving the challenge data. Still alternatively, the authentication unit 90 may prohibit the response transmission unit 94 from transmitting response data.

The response setting unit 92 sets, in the field for a random value in the response data, data derived by synthesizing (e.g., concatenating) a value derived by converting the random value included in the challenge data (in the embodiment, the random value in the challenge data + 1) and the user terminal address included in the challenge data.

A description will be given of the operation of the remote control system 10 according to the second embodiment.

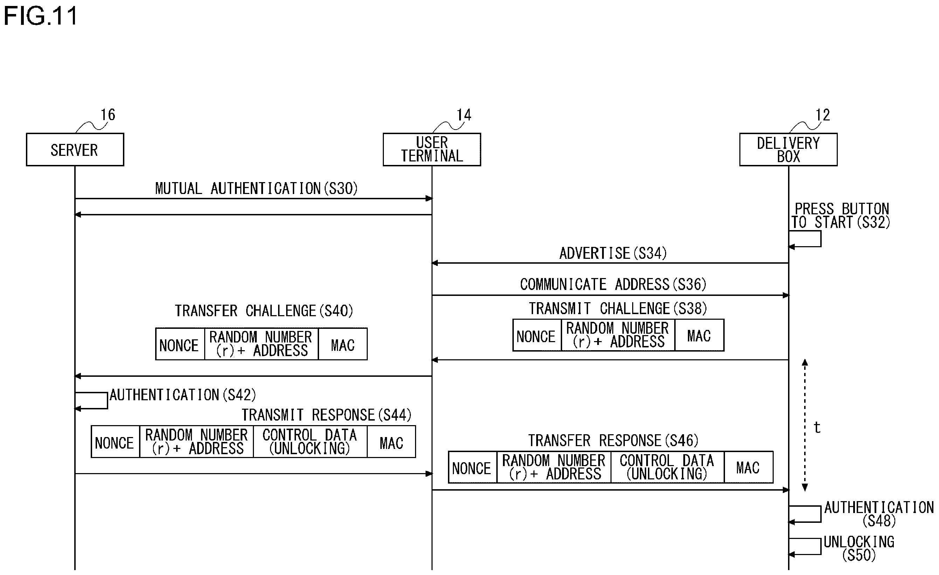

Fig. 11 shows the operation of the devices in the remote control system 10 according to the second embodiment. As in the first embodiment, the common MAC key is stored in advance in the server 16 and the delivery box 12. The authentication unit 90 of the server 16 and the authentication unit 106 of the user terminal 14 perform mutual authentication including client authentication (S30). It is assumed here that mutual authentication is successful and that the server 16 and the user terminal 14 can communicate in an encrypted tunnel (which can be said to be an "SSL tunnel"), i.e., that encryption and tunneling communication are enabled.

The user inputs a predetermined unlocking process start user operation in the delivery box 12. The user operation detection unit 44 of the delivery box 12 detects the input of the unlocking process start user operation, and the sleep control unit 46 of the delivery box 12 returns the communication unit 32 from a suspended state to a normal state (S32). The communication unit 32 of the delivery box 12 broadcasts an advertisement packet around (S34). In response to the reception of the advertisement packet, the address communication unit 108 of the user terminal 14 transmits data indicating the user terminal address to the delivery box 12 (S36).

The challenge setting unit 48 of the delivery box 12 sets challenge data including the user terminal address, and the challenge transmission unit 50 of the delivery box 12 transmits the challenge data to the user terminal 14 (S38). When communication with the delivery box 12 is started, the display control unit 72 of the user terminal 14 starts to cause the display unit 62 to display "communication proceeding". The challenge transfer unit 68 of the user terminal 14 transfers the challenge data to the server 16 via an encrypted tunnel (i.e., by SSL communication) (S40).

The authentication unit 90 of the server 16 executes message authentication based on the MAC included in the challenge data (S42). When the legitimacy of the challenge data is verified by the message authentication, the response setting unit 92 of the server 16 generates response data based on the challenge data. The response transmission unit 94 of the server 16 transmits the response data to the user terminal 14 via an encrypted tunnel (i.e., by SSL communication) (S44). The response transfer unit 70 of the user terminal 14 transfers the response data to the delivery box 12 (S46).

The authentication unit 54 of the delivery box 12 checks whether the response data is legitimate based on (1) the response time t elapsed since the transmission of the challenge data until the reception of the response data, (2) the random value in the response data, ((3) the MAC in the response data, and (4) the user terminal address in the response data (S48). When it is determined that the response data is legitimate, the unlocking unit 56 of the delivery box 12 unlocks the electric lock 38 (S50). The user can open the door unit 36 of the delivery box 12 and take out the article stored in the delivery box 12.

The remote control system 10 according to the second embodiment provides the same advantage as the remote control system 10 according to the first embodiment. In the remote control system 10 according to the second embodiment, the delivery box 12 acquires the address of the user terminal 14 in advance and checks the identity with the address of the transmitter of the control data. This prevents a spoofing attack from an attacker terminal on the user terminal 14 (e.g., a man in the middle attack) even more properly.

In the remote control system 10 according to the second embodiment, the server 16 checks the legitimacy of the user terminal 14 by client authentication. This prevents a spoofing attack from an attacker terminal on the user terminal 14 (e.g., a man in the middle attack) even more properly.

Given above is a description of the disclosure based on the first and second embodiments. The embodiments are intended to be illustrative only and it will be understood by those skilled in the art that various modifications to constituting elements and processes could be developed and that such modifications are also within the scope of the present disclosure.

The remote control system 10 according to the first and second embodiments includes the delivery box 12, the user terminal 14, and the server 16. In a variation, the remote control system 10 includes the delivery box 12 and the user terminal 14 but may not include the server 16. In this case, the user terminal 14 may be provided with the function of the response setting unit 92 of the server 16 of the embodiments. For example, the user terminal 14 may generate response data including control data and transmit the generated response data to the delivery box 12. This variation equally provides the same advantage as the first and second embodiments. For example, unauthorized remote control by response data theft and delayed retransmission can be prevented by providing a restriction on the response time elapsed since the transmission of the challenge data until the reception of the response data.

In the remote control system 10 according to the first and second embodiments, the controlled device that is remotely controlled is exemplified by the delivery box 12. However, the controlled device to which the technology disclosed in the first and second embodiments can be applied is not limited to the delivery box 12. The controlled device may any of various devices remotely controlled by a communication terminal such as a smartphone. For example, the controlled device may be a smart lock device, a keyless entry device of a vehicle, a man location system using a Local Positioning System (LPS), or a cashless purchase system using a Radio Frequency IDentifier (RFID).

### [INDUSTRIAL APPLICABILITY]

The disclosure is applicable to a system for controlling a target device remotely.

### [REFERENCE SIGNS LIST]

10 remote control system, 12 delivery box, 14 user terminal, 16 server, 32 communication unit, 38 electric lock

## Claims

1. A remote control system comprising (10):
a controlled device (12) that is remotely controlled; and
a mobile communication terminal (14) that is configured to perform wireless communication with the controlled device (12), wherein
the controlled device (12) is configured to transmit, when accepting remote control, first data to the communication terminal (14),
the mobile communication terminal (14) is configured to transmit second data including a detail of remote control to the controlled device in response to the first data, and
the controlled device (12) is configured to perform a process determined by the detail of remote control included in the second data when a time elapsed since the first data is transmitted until the second data is received is less than a threshold value,
further comprising:
a server (16) connected to the communication terminal (14) via a network, wherein
the mobile communication terminal (14) is configured to transfer the first data received to the server (16), is configured to transmit
the server (16) the second data to the mobile communication terminal (14) in response to the first data, and
the mobile communication terminal (14) is configured to transfer the second data received to the controlled device (12),
wherein
the mobile communication terminal (14) is configured to display that communication is proceeding during communication with the server (16) or during communication with the server (16) and the controlled device (12).

2. The remote control system (10) according to claim 1, wherein
the first data includes a random number determined by the controlled device (12),
the second data includes an authentication value determined by the random number included in the first data, and
the controlled device (12) is configured to restrict execution of the process determined by the detail of remote control included in the second data in accordance with the authentication value included in the second data.

3. The remote control system (10) according to claim 1 or 2, wherein
the first data includes a message authentication code, and
the server (16) is configured to restrict transmission of the second data in accordance with a result of message authentication using the message authentication code included in the first data.

4. The remote control system (10) according to any one of claims 1 to 3, wherein
the second data includes a message authentication code, and
the controlled device (12) is configured to restrict execution of a process determined by the detail of remote control included in the second data in accordance with a result of message authentication using the message authentication code included in the second data.

5. The remote control system (10) according to any one of claims 1 to 4, wherein
the server (16) is configured to perform client authentication of the mobile communication terminal (14) and is configured to restrict communication with the mobile communication terminal (14) in accordance with a result of the client authentication.

6. The remote control system (10) according to any one of claims 1 to 4, wherein
the server (16) and the mobile communication terminal (14) are configured to perform mutual authentication such that the server (16) is configured to perform client authentication of the mobile communication terminal (14), and the mobile communication terminal (14) is configured to perform server authentication of the server (16), and
the server (16) is configured to restrict communication with the mobile communication terminal (14) in accordance with a result of the mutual authentication.

7. The remote control system (10) according to any one of claims 1 to 6, wherein
the mobile communication terminal (14) is configured to communicate an address of the mobile communication terminal (14) to the controlled device (12),
the first data includes data corresponding to the address of the mobile communication terminal (14),
the second data includes the data included in the first data and corresponding to the address of the mobile communication terminal (14), and
when the data included in the second data and corresponding to the address of the mobile communication terminal (14) does not match a destination address of the first data, the controlled device (12) is configured to restrict execution of the process determined by the detail of remote control included in the second data.

8. The remote control system (10) according to any one of claims 1 to 7, wherein
the controlled device (12) includes a communication unit (32) that is configured to perform wireless communication with the mobile communication terminal (14),
the communication unit (32) is driven by a battery provided in the controlled device (12), and
when a predetermined user operation designating acceptance of remote control is input in the controlled device (12), the communication unit (32) is configured to return from a suspended state and to perform wireless communication.

9. The remote control system (10) according to any one of claims 1 to 7, wherein
the controlled device (12) includes a communication unit (32) that is configured to perform wireless communication with the mobile communication terminal (14), and
when a predetermined user operation designating acceptance of remote control is input in the controlled device (12), the communication unit (32) is configured to perform wireless communication.

10. The remote control system (10) according to any one of claims 1 to 9, wherein
the controlled device (12) includes an electric lock (38), and
the second data includes, as the detail of remote control, data designating unlocking of the electric lock (38) .

11. The remote control system (10) according to any one of the claims 1 to 10, wherein the mobile communication terminal (14) and the controlled device (12) are connected via a near-field communication network (18).

## Patentansprüche

1. Fernsteuerungssystem (10), aufweisend:
eine gesteuerte Vorrichtung (12), die ferngesteuert wird; und
eine mobile Kommunikationsendvorrichtung (14), die konfiguriert ist, um eine drahtlose Kommunikation mit der gesteuerten Vorrichtung (12) durchzuführen, wobei
die gesteuerte Vorrichtung (12) konfiguriert ist, um, wenn sie die Fernsteuerung akzeptiert, erste Daten an die Kommunikationsendvorrichtung (14) zu senden,
die mobile Kommunikationsendvorrichtung (14) konfiguriert ist, um als Reaktion auf die ersten Daten zweite Daten, die ein Detail der Fernsteuerung enthalten, an die gesteuerte Vorrichtung (12) zu senden, und
die gesteuerte Vorrichtung (12) konfiguriert ist, um einen Prozess durchzuführen, der durch das Detail der Fernsteuerung, das in den zweiten Daten enthalten ist, bestimmt wird, wenn eine Zeit, die seit dem Senden der ersten Daten bis zum Empfangen der zweiten Daten verstrichen ist, kleiner als ein Schwellenwert ist,
ferner aufweisend:
einen Server (16), der mit der Kommunikationsendvorrichtung (14) über ein Netzwerk verbunden ist, wobei
die mobile Kommunikationsendvorrichtung (14) konfiguriert ist, um die empfangenen ersten Daten an den Server (16) zu übertragen,
der Server (16) konfiguriert ist, um die zweiten Daten als Reaktion auf die ersten Daten an die mobile Kommunikationsendvorrichtung (14) zu senden, und
die mobile Kommunikationsendvorrichtung (14) konfiguriert ist, um die zweiten empfangenen Daten an die gesteuerte Vorrichtung (12) zu übertragen, wobei
die mobile Kommunikationsendvorrichtung (14) konfiguriert ist, um während der Kommunikation mit dem Server (16) oder während der Kommunikation mit dem Server (16) und der gesteuerten Vorrichtung (12) anzuzeigen, dass die Kommunikation stattfindet.

2. Fernsteuerungssystem (10) nach Anspruch 1, wobei
die ersten Daten eine Zufallszahl enthalten, die von der gesteuerten Vorrichtung (12) bestimmt wird,
die zweiten Daten einen Authentifizierungswert enthalten, der durch die Zufallszahl bestimmt wird, die in den ersten Daten enthalten sind, und
die gesteuerte Vorrichtung (12) konfiguriert ist, um eine Ausführung des Prozesses, der durch das Detail der Fernsteuerung bestimmt wird, das in den zweiten Daten enthalten ist, in Übereinstimmung mit dem Authentifizierungswert zu beschränken, der in den zweiten Daten enthalten ist.

3. Fernsteuerungssystem (10) nach Anspruch 1 oder 2, wobei
die ersten Daten einen Nachrichtenauthentifizierungscode enthalten, und
der Server (16) konfiguriert ist, um ein Senden der zweiten Daten in Übereinstimmung mit einem Ergebnis der Nachrichtenauthentifizierung unter Verwendung des Nachrichtenauthentifizierungscodes, der in den ersten Daten enthalten ist, zu beschränken.

4. Fernsteuerungssystem (10) nach einem der Ansprüche 1 bis 3, wobei
die zweiten Daten einen Nachrichtenauthentifizierungscode enthalten, und
die gesteuerte Vorrichtung (12) konfiguriert ist, um die Ausführung eines Prozesses, der durch das Detail der Fernsteuerung bestimmt wird, das in den zweiten Daten enthalten ist, in Übereinstimmung mit einem Ergebnis der Nachrichtenauthentifizierung unter Verwendung des Nachrichtenauthentifizierungscodes zu beschränken, der in den zweiten Daten enthalten ist.

5. Fernsteuerungssystem (10) nach einem der Ansprüche 1 bis 4, wobei
der Server (16) konfiguriert ist, um eine Client-Authentifizierung der mobilen Kommunikationsendvorrichtung (14) durchzuführen, und konfiguriert ist, um die Kommunikation mit der mobilen Kommunikationsendvorrichtung (14) in Übereinstimmung mit einem Ergebnis der Client-Authentifizierung zu beschränken.

6. Fernsteuerungssystem (10) nach einem der Ansprüche 1 bis 4, wobei
der Server (16) und die mobile Kommunikationsendvorrichtung (14) konfiguriert sind, um eine gegenseitige Authentifizierung durchzuführen, so dass der Server (16) konfiguriert ist, um eine Client-Authentifizierung der mobilen Kommunikationsendvorrichtung (14) durchzuführen, und die mobile Kommunikationsendvorrichtung (14) konfiguriert ist, um eine Server-Authentifizierung des Servers (16) durchzuführen, und
der Server (16) konfiguriert ist, um die Kommunikation mit der mobilen Kommunikationsendvorrichtung (14) in Übereinstimmung mit einem Ergebnis der gegenseitigen Authentifizierung zu beschränken.

7. Fernsteuerungssystem (10) nach einem der Ansprüche 1 bis 6, wobei
die mobile Kommunikationsendvorrichtung (14) konfiguriert ist, um eine Adresse der mobilen Kommunikationsendvorrichtung (14) an die gesteuerte Vorrichtung (12) zu kommunizieren,
die ersten Daten Daten enthalten, die der Adresse der mobilen Kommunikationsendvorrichtung (14) entsprechen,
die zweiten Daten die Daten enthalten, die in den ersten Daten enthalten sind und der Adresse der mobilen Kommunikationsendvorrichtung (14) entsprechen, und
wenn die Daten, die in den zweiten Daten enthalten sind und der Adresse der mobilen Kommunikationsendvorrichtung (14) entsprechen, nicht mit einer Zieladresse der ersten Daten übereinstimmen, die gesteuerte Vorrichtung (12) konfiguriert ist, um die Ausführung des Prozesses zu beschränken, der durch das Detail der Fernsteuerung bestimmt wird, das in den zweiten Daten enthalten ist.

8. Fernsteuerungssystem (10) nach einem der Ansprüche 1 bis 7, wobei
die gesteuerte Vorrichtung (12) eine Kommunikationseinheit (32) aufweist, die konfiguriert ist, um eine drahtlose Kommunikation mit der mobilen Kommunikationsendvorrichtung (14) durchzuführen,
die Kommunikationseinheit (32) von einer Batterie betrieben wird, die in der gesteuerten Vorrichtung (12) vorgesehen ist, und
wenn eine vorbestimmte Benutzeroperation, die eine Annahme der Fernsteuerung bezeichnet, in die gesteuerte Vorrichtung (12) eingegeben wird, die Kommunikationseinheit (32) konfiguriert ist, um aus einem angehaltenen Zustand zurückzukehren und eine drahtlose Kommunikation durchzuführen.

9. Fernsteuerungssystem (10) nach einem der Ansprüche 1 bis 7, wobei
die gesteuerte Vorrichtung (12) eine Kommunikationseinheit (32) aufweist, die konfiguriert ist, um eine drahtlose Kommunikation mit der mobilen Kommunikationsendvorrichtung (14) durchzuführen, und
wenn eine vorbestimmte Benutzeroperation, die eine Annahme der Fernsteuerung bezeichnet, in die gesteuerte Vorrichtung (12) eingegeben wird, die Kommunikationseinheit (32) konfiguriert ist, um eine drahtlose Kommunikation durchzuführen,

10. Fernsteuerungssystem (10) nach einem der Ansprüche 1 bis 9, wobei
die gesteuerte Vorrichtung (12) ein elektrisches Schloss (38) aufweist, und
die zweiten Daten als das Detail der Fernsteuerung Daten enthalten, die ein Entriegeln des elektrischen Schlosses (38) bezeichnen.

11. Fernsteuerungssystem (10) nach einem der Ansprüche 1 bis 10, wobei die mobile Kommunikationsendvorrichtung (14) und die gesteuerte Vorrichtung (12) über ein Nahfeldkommunikationsnetz (18) verbunden sind.

## Revendications

1. Système de commande à distance (10), comprenant :
un dispositif commandé (12) qui est commandé à distance ; et
un terminal de communication mobile (14) qui est configuré de manière à mettre en oeuvre une communication sans fil avec le dispositif commandé (12), dans lequel
le dispositif commandé (12) est configuré de manière à transmettre, lorsqu'il accepte la commande à distance, des premières données, au terminal de communication mobile (14) ;
le terminal de communication mobile (14) est configuré de manière à transmettre des deuxièmes données, incluant le détail de la commande à distance, au dispositif commandé (12), en réponse aux premières données ; et
le dispositif commandé (12) est configuré de manière à mettre en oeuvre un processus déterminé par le détail de la commande à distance inclus dans les deuxièmes données lorsqu'un temps écoulé depuis la transmission des premières données jusqu'à la réception des deuxièmes données est inférieur à une valeur de seuil ;
comprenant en outre :
un serveur (16) connecté au terminal de communication mobile (14) par l'intermédiaire d'un réseau, dans lequel
le terminal de communication mobile (14) est configuré de manière à transférer les premières données reçues au serveur (16) ;
le serveur (16) est configuré de manière à transmettre les deuxièmes données au terminal de communication mobile (14), en réponse aux premières données ; et
le terminal de communication mobile (14) est configuré de manière à transférer les deuxièmes données reçues au dispositif commandé (12) ;
dans lequel
le terminal de communication mobile (14) est configuré de manière à afficher que la communication est en cours pendant la communication avec le serveur (16) ou pendant la communication avec le serveur (16) et le dispositif commandé (12).

2. Système de commande à distance (10) selon la revendication 1, dans lequel :
les premières données incluent un nombre aléatoire déterminé par le dispositif commandé (12) ;
les deuxièmes données incluent une valeur d'authentification déterminée par le nombre aléatoire inclus dans les premières données ; et
le dispositif commandé (12) est configuré de manière à restreindre l'exécution du processus déterminé par le détail de la commande à distance inclus dans les deuxièmes données selon la valeur d'authentification incluse dans les deuxièmes données.

3. Système de commande à distance (10) selon la revendication 1 ou 2, dans lequel :
les premières données incluent un code d'authentification de message ; et
le serveur (16) est configuré de manière à restreindre la transmission des deuxièmes données selon un résultat d'authentification de message utilisant le code d'authentification de message inclus dans les premières données.

4. Système de commande à distance (10) selon l'une quelconque des revendications 1 à 3, dans lequel :
les deuxièmes données incluent un code d'authentification de message ; et
le dispositif commandé (12) est configuré de manière à restreindre l'exécution d'un processus déterminé par le détail de la commande à distance inclus dans les deuxièmes données selon un résultat d'authentification de message utilisant le code d'authentification de message inclus dans les deuxièmes données.

5. Système de commande à distance (10) selon l'une quelconque des revendications 1 à 4, dans lequel :
le serveur (16) est configuré de manière à mettre en oeuvre une authentification client du terminal de communication mobile (14) et est configuré de manière à restreindre la communication avec le terminal de communication mobile (14) selon un résultat de l'authentification client.

6. Système de commande à distance (10) selon l'une quelconque des revendications 1 à 4, dans lequel :
le serveur (16) et le terminal de communication mobile (14) sont configurés de manière à mettre en oeuvre une authentification mutuelle de sorte que le serveur (16) est configuré de manière à mettre en oeuvre une authentification client du terminal de communication mobile (14), et que le terminal de communication mobile (14) est configuré de manière à mettre en oeuvre une authentification serveur du serveur (16) ; et
le serveur (16) est configuré de manière à restreindre la communication avec le terminal de communication mobile (14) selon un résultat de l'authentification mutuelle.

7. Système de commande à distance (10) selon l'une quelconque des revendications 1 à 6, dans lequel :
le terminal de communication mobile (14) est configuré de manière à communiquer une adresse du terminal de communication mobile (14) au dispositif commandé (12) ;
les premières données incluent des données correspondant à l'adresse du terminal de communication mobile (14) ;
les deuxièmes données incluent les données incluses dans les premières données et correspondant à l'adresse du terminal de communication mobile (14) ; et
lorsque les données incluses dans les deuxièmes données et correspondant à l'adresse du terminal de communication mobile (14) ne correspondent pas à une adresse de destination des premières données, le dispositif commandé (12) est configuré de manière à restreindre l'exécution du processus déterminé par le détail de la commande à distance inclus dans les deuxièmes données.

8. Système de commande à distance (10) selon l'une quelconque des revendications 1 à 7, dans lequel :
le dispositif commandé (12) inclut une unité de communication (32) qui est configurée de manière à mettre en oeuvre une communication sans fil avec le terminal de communication mobile (14) ;
l'unité de communication (32) est alimentée par une batterie fournie dans le dispositif commandé (12) ; et
lorsqu'une opération utilisateur prédéterminée désignant l'acceptation de la commande à distance est appliquée en entrée dans le dispositif commandé (12), l'unité de communication (32) est configurée de manière à revenir d'un état suspendu et à mettre en oeuvre une communication sans fil.

9. Système de commande à distance (10) selon l'une quelconque des revendications 1 à 7, dans lequel :
le dispositif commandé (12) inclut une unité de communication (32) qui est configurée de manière à mettre en oeuvre une communication sans fil avec le terminal de communication mobile (14) ; et
lorsqu'une opération utilisateur prédéterminée désignant l'acceptation de la commande à distance est appliquée en entrée dans le dispositif commandé (12), l'unité de communication (32) est configurée de manière à mettre en oeuvre une communication sans fil.

10. Système de commande à distance (10) selon l'une quelconque des revendications 1 à 9, dans lequel :
le dispositif commandé (12) inclut une serrure électrique (38) ; et
les deuxièmes données incluent, en tant que détail de la commande à distance, des données désignant le déverrouillage de la serrure électrique (38).

11. Système de commande à distance (10) selon l'une quelconque des revendications 1 à 10, dans lequel le terminal de communication mobile (14) et le dispositif commandé (12) sont connectés par l'intermédiaire d'un réseau de communication en champ proche (18).
